# EUROPEAN PATENT SPECIFICATION

(11) **EP 2 698 949 B1**
(45) Date of publication and mention of the grant of the patent: **19.06.2019**
(21) Application number: 12771571.2
(22) Date of filing: 22.02.2012
(51) Int. Cl.: H04L 12/705, H04L 12/931, H04L 12/413, H04L 12/26

(54) **METHOD AND SYSTEM FOR SETTING DETECTION FRAME TIMEOUT DURATION OF ETHERNET NODEs**
VERFAHREN UND SYSTEM ZUM EINSTELLEN DER ERKENNUNGSRAHMEN-ZEITÜBERSCHREITUNGSDAUER VON ETHERNET-KNOTEN
PROCÉDÉ ET SYSTÈME DE RÉGLAGE DE DURÉE DE TEMPORISATION DE TRAME DE DÉTECTION DES NOEUDS ETHERNET

(30) Priority: 13.04.2011 CN 201110092503
(43) Date of publication of application: 19.02.2014
(73) Proprietor: ZTE Corporation, Shenzhen, Guangdong 518057 (CN)
(72) Inventor: WU, Shaoyong, Guangdong 518057 (CN); WEI, Yuehua, Guangdong 518057 (CN)
(74) Representative: Savi, Massimiliano
(86) International application number: PCT/CN2012/071452
(87) International publication number: WO 2012/139434

(56) References cited:
- EP-A1- 2 194 676
- EP-A2- 1 416 671
- WO-A1-2010/148721
- WO-A1-2011/020330
- CN-A- 1 988 476
- CN-A- 101 141 366
- CN-A- 101 931 573
- US-A1- 2009 207 726
- MARUYOSHI M ET AL: "Draft ITU-T Recommendation G.8032/Y.1344 Ethernet Rings Protection Switching", INTERNATIONAL TELECOMMUNICATION UNION, , no. TD 498 (PLEN/15) 11 February 2008 (2008-02-11), pages 1-35, XP002628432, Retrieved from the Internet: URL:http://www.itu.int/md/T05-SG15-080211- TD-PLEN-0498/en [retrieved on 2011-03-16]

## Description

### Technical Field

The present document relates to the Ethernet technology, and in particular, to a method and system for setting a detection frame timeout duration of an Ethernet node for detecting a loop forming point.

### Background of the Related Art

With the expansion of the scope of the Ethernet application, the reliability problem becomes more and more outstanding, and a typical kind of problem is the "Internet storm" caused by a closed loop of the Ethernet.

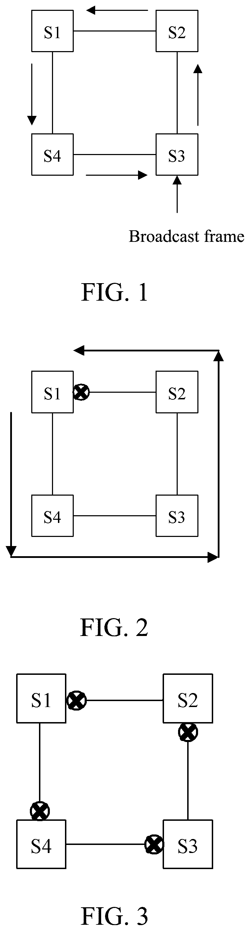

According to the principle of the Ethernet, after an Ethernet node receives a broadcast frame, the Ethernet node will forward the broadcast frame to other ports except for the receiving port. If there is a closed loop in the Ethernet, various nodes in the closed loop will forward the broadcast frame endlessly, the bandwidth occupied by the broadcast traffic will increase rapidly, and such phenomenon is referred to as "Internet storm". As shown in Fig. 1, node S1, node S2, node S3 and node S4 constitute a closed loop of the Ethernet, and after node S3 receives one broadcast frame, node S3 forwards the broadcast frame to node S2, then node S2 forwards the broadcast frame to node S1, node S1 forwards the broadcast frame to node S4, node S4 forwards the broadcast frame to node S3, and node S3 continues to forward the broadcast frame to node S2, thus forming cyclic forwarding of the broadcast frame, i.e., S3->S2->S1->S4->S3......, and with the increase of the broadcast frames, the bandwidth occupied by the broadcast traffic will increase rapidly, which may result in "Internet storm".

In order to avoid a waste of traffic due to such closed loop of the Ethernet, a method for detecting a closed loop is mostly used in the prior art, and the basic principle of the implementation of the method is as follows: a node transmits one detection frame, if the node can receive the detection frame transmitted by itself, it illustrates that there is a closed loop between the transmitting port and the receiving port of the node, and it needs to isolate the port to avoid the closed loop. Wherein, when the node transmits a detection frame, a flag of its own (for example, a MAC address of the node) and port number information of the transmitting port are carried in the detection frame, and when the node receives one detection frame from a communication port, whether the node flag in the detection frame is the same as the node flag of its own is determined first. If they are the same, it illustrates that the received detection frame is transmitted by the node, and then whether the port number of the communication port satisfies an isolation rule is further determined, and if the port number satisfies the isolation rule, the communication port is isolated. Such isolation rule can be that a port number of the communication port which receives this detection frame in the node is larger than or less than the number port of the transmitting port carried in the detection frame. Wherein, the isolation operation refers to prohibiting the port from forwarding data (i.e., not being allowed to forward the data received from other nodes) while permitting the port to receive the protocol data (including the detection frame). If the node does not receive the detection frame transmitted by itself for a period of time after the communication port is isolated, the isolation for this communication port is relieved, and that period of time is referred to as a detection frame timeout duration, or is also referred to as a timing duration during which a formed loop disappears.

The above method is simple and practical, but there is also some limitation. In the existing Ethernet, when the port of the node changes from a non-connected state to a connected state, for example, this port is connected to a new link, it may result in a closed loop, and the node where the port is located is referred to as a loop forming point. After the closed loop is formed, all of various nodes on the closed loop can detect the closed loop, and isolate the corresponding ports, and although it avoids the closed loop, all of the various nodes on the closed loop can not forward data, which results in unavailability of the network. In addition, after various nodes on the closed loop detect the closed loop, all the nodes isolate the ports, and after the detection frame timeout duration of the port, the node does not receive the detection frame transmitted by itself, and considers that the closed loop disappears, opens the isolated ports again, which will form a closed loop again. As shown in Fig. 2, in the closed loop formed of node S1, node S2, node S3 and node S4, node S1 isolates the corresponding port after receiving the detection frame transmitted by itself, similarly, all of node S2, node S3 and node S4 will receive the detection frames transmitted by themselves, isolate the corresponding ports respectively, as shown in Fig. 3, and finally various nodes can not forward the data, which will result in unavailability of the whole network. In addition, after various nodes in the closed loop isolate the ports, if node S1 does not receive the detection frame transmitted by itself after detection frame timeout duration of the port, node S1 will open the isolated port again (i.e., relieving the isolation), similarly, if node S2, node S3 and node S4 do not receive the detection frames transmitted by themselves after detection frame timeout duration of the ports respectively, they will also open the isolated ports again (i.e., relieving the isolation), thus a closed loop will be formed again. In addition, this method can not detect a specific location of a loop forming point, which brings difficulty for the network maintenance.

At present, there is no solution for the problems that the nodes which detect the closed loop isolating the ports results in large scale unavailability of the network and a closed loop is formed again after various nodes which detect the closed loop open the ports, and it is difficult to detect a location of a loop forming point.

The document, WO 2010/148721 A1, discloses that a method for measuring the switch tune of the Ethernet ring network is provided by the present invention that includes the following steps: the local time of each node in the Ethernet ring network is synchronized (301); when a switch occurs in the Ethernet ring network, each node records its own start time of the switch and end time of the switch (302); all the switch time is compared to obtain the maximum end time of the switch and the minimum start time of the switch among all the nodes, and the difference between the maximum end time of the switch and the minimum start time of the switch is calculated (303), as the switch time of the Ethernet ring network. And an apparatus for measuring the switch time.

The document, EP 1416671 A2, discloses a high availability backplane architecture including redundant node boards operatively communicating with redundant switch fabric boards.

The document, US 2009/0207726 A1 discloses methods and systems for fast and reliable network recovery from multiple failures. In accordance with one example of the method, a master node receives a request from a transit node having a blocked port to open the blocked port for data forwarding, wherein the blocked port is associated with a restored link. The master node starts a health-check timer and transmits a health-check message on its primary port to determine that all failed links of the network are restored.

The document CN101931573 proposes to locate an Ethernet loop forming point by using different detection frame types leading to port isolation of various nodes and resulting in opening the loop.

### Summary of the Invention

The technical problem to be solved by the present document is to provide a method and system for setting a detection frame timeout duration for detecting a loop forming point in a network of Ethernet nodes as defined in the independent claims by setting the detection frame timeout duration of the Ethernet node, to prevent a waste of bandwidth caused by data cycle due to a closed loop of a network, thereby ensuring node connectivity while preventing the closed loop from being formed again, and improving the network performance.

In order to solve the above technical problem, the present document provides a method for setting a detection frame timeout duration of an Ethernet node, comprising:
when an Ethernet node determines that a communication port keeps a connected state unchanged or changes to a non-connected state from the connected state, setting a detection frame timeout duration of the communication port to a value within a first time range; and after the Ethernet node detects that the communication port changes to the connected state from the non-connected state, setting the detection frame timeout duration of the communication port to a value within a second time range, wherein the value within the second time range is greater than the value within the first time range.

In the method,
the non-connected state of the communication port includes a non-operating state, a failure state or a state in which data can not be received and transmitted.

The method further comprises:
when the Ethernet node receives a detection frame transmitted by itself in the detection frame timeout duration of the communication port and a port number of the communication port satisfies an isolation rule, isolating the communication port;
when the Ethernet node does not receive the detection frame transmitted by itself in the detection frame timeout duration after the communication port is isolated, relieving the isolation for the communication port immediately or after a random delay; wherein when various of said Ethernet nodes, which form a closed loop, change from forming the closed loop to forming an open loop, determining an Ethernet node from the various Ethernet nodes, where its port is isolated and the port is the last port, which enables to convert to open loop to the closed loop, to be the loop forming point of the closed loop.

Optionally, in the method,
the detection frame timeout durations of communication ports corresponding to different Ethernet nodes within the first time range are the same or different; and the detection frame timeout durations of communication ports corresponding to different Ethernet nodes within the second time range are the same or different.

In order to solve the above technical problem, the present document further provides a system for setting a detection frame timeout duration of an Ethernet node, comprising the Ethernet node, wherein,
the Ethernet node is configured to, when determining that a communication port keeps a connected state unchanged or changes to a non-connected state from the connected state, set a detection frame timeout duration of the communication port to a value within a first time range; and after detecting that the communication port changes to the connected state from the non-connected state, set the detection frame timeout duration of the communication port to a value within a second time range, wherein the value within the second time range is greater than the value within the first time range.

In the system,
the non-connected state of the communication port includes a non-operating state, a failure state or a state in which data can not be received and transmitted.

Optionally, in the system,
the detection frame timeout durations of communication ports corresponding to different Ethernet nodes within the first time range are the same or different; and
the detection frame timeout durations of communication ports corresponding to different Ethernet nodes within the second time range are the same or different.

When various Ethernet nodes, which form a closed loop, change from forming the closed loop to forming an open loop, the method determines an Ethernet node where a port which finally enables the open loop to be converted to a closed loop and is isolated is located, to be the loop forming point of the closed loop.

Optionally, in the method,
the detection frame timeout durations of communication ports corresponding to different Ethernet nodes within the first time range are the same or different; and
the detection frame timeout durations of communication ports corresponding to different Ethernet nodes within the second time range are the same or different.

The manner for setting the detection frame timeout duration of the Ethernet node in the embodiment of the present document can prevent a waste of bandwidth caused by data cycle due to a closed loop of a network, thereby ensuring node connectivity while preventing the closed loop from being formed again, and improving the network performance. The embodiment of the present document can further detect a loop forming point, to facilitate the network maintenance.

### Brief Description of Drawings

Fig. 1 is a diagram of a closed loop of an Ethernet forming "Internet storm" in the prior art;
Fig. 2 is a diagram of avoiding a closed loop of an Ethernet in the prior art;
Fig. 3 is a diagram of all nodes of a closed loop of an Ethernet isolating ports in the prior art;
Fig. 4 is a diagram of a flow of implementation according to the present document;
Fig. 5 is a diagram of a network connection condition in specific embodiment one;
Fig. 6 is diagram one of another network connection condition in specific embodiment one; and
Fig. 7 is a diagram two of another network connection condition in specific embodiment one.

### Preferred Embodiments of the Invention

The embodiments of the present document will be described in detail below in conjunction with accompanying drawings. It should be illustrated that, embodiments in the present application and features in the embodiments can be randomly combined with each other without conflict.

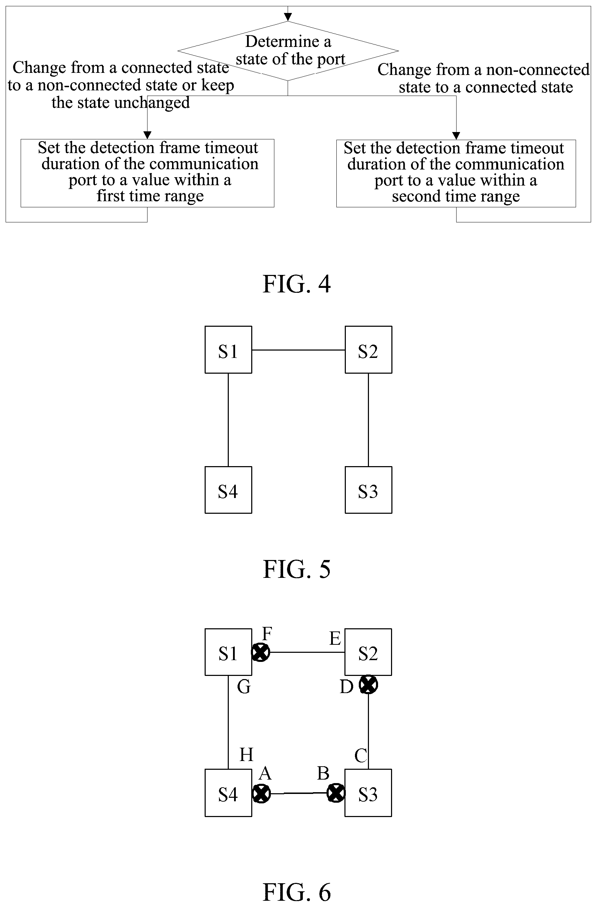

As shown in Fig. 4, a method for setting a detection frame timeout duration of an Ethernet node comprises: when an Ethernet node determines that a communication port keeps a connected state unchanged or changes to a non-connected state from the connected state, setting a detection frame timeout duration of the communication port to a value within a first time range (represented as T1); and after the Ethernet node detects that the communication port changes to the connected state from the non-connected state, setting the detection frame timeout duration of the communication port to a value within a second time range (represented as T2), the value within the second time range is greater than the value within the first time range.

The non-connected state of the communication port includes a non-operating state, a failure state or a state in which data can not be received and transmitted.

When the Ethernet node receives a detection frame transmitted by itself in the detection frame timeout duration of the communication port and a port number of the communication port satisfies an isolation rule, it is to isolate the communication port; when the Ethernet node does not receive the detection frame transmitted by itself in the detection frame timeout duration after the communication port is isolated, it is to relieve the isolation for the communication port immediately or after a random delay.

After various nodes form a closed loop through the setting of the above method, all of the various nodes can receive the detection frames transmitted by themselves, and isolate the corresponding ports successively to disconnect the closed loop. As the detection frame timeout duration of the communication port which changes from a non-connected state to a connected state is set as T2, which is greater than the detection frame timeout duration T1 of the port of a non-loop forming point, other nodes will first open the isolated port, and at this time the loop forming point can continue to receive the detection frame transmitted by itself, to make the port keeps the isolated state, which prevents the closed loop from being generated gain and prevents the data frame being forwarded circularly.

Detection frame timeout durations within the first time range are the same or different for communication ports of different Ethernet nodes; and detection frame timeout durations within the second time range are the same or different for communication ports of different Ethernet nodes.

Based on the above method, the embodiment of the present document provides a method for detecting a loop forming point, comprising: when an Ethernet node determines that a communication port keeps a connected state unchanged or changes to a non-connected state from the connected state, setting a detection frame timeout duration of the communication port to a value within a first time range; and after the Ethernet node detects that the communication port changes to the connected state from the non-connected state, setting the detection frame timeout duration of the communication port to a value within a second time range, wherein the value within the second time range is greater than the value within the first time range; in the process that various Ethernet nodes which form a closed loop change from forming the closed loop to forming an open loop, determining an Ethernet node where a port which finally enables the open loop to be converted to a closed loop and is isolated is located, to be the loop forming point of the closed loop.

The non-connected state of the communication port includes a non-operating state, a failure state or a state in which data can not be received and transmitted.

Detection frame timeout durations within the first time range are the same or different for communication ports of different Ethernet nodes; and detection frame timeout durations within the second time range are the same or different for communication ports of different Ethernet nodes.

A system corresponding to the above method implements the above method through the Ethernet node, and will not be described here again.

The embodiment of the present embodiment will be described in detail below by a specific embodiment.

### Specific embodiment one

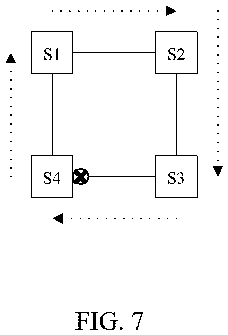

A topology of an Ethernet is shown in Fig. 5, there is no closed loop in the network comprised of node S1, node S2, node S3 and node S4, and all the various nodes do not receive the detection frames transmitted by themselves, there is no port to be isolated, and various nodes can communicate normally. As shown in Fig. 6, after a new link is connected between node S3 and node S4, a closed loop is formed, node S3 and node S4 detect that the port changes from a non-operating state (one of non-connected states) to a connected state, node S3 and node S4 reset the detection frame timeout duration of the ports to a greater value T2, for example, node S4 sets the detection frame timeout duration of port A to 1.5s, and node S3 sets the detection frame timeout duration of port B to 1.1s, while the states of ports of node S1 and node S2 are not changed, and the detection frame timeout durations of ports D, E, F and G remain the original values T1, for example, 0.5s. It is assumed that the isolation rule is that when the port number of the communication port which receives the detection frame is larger than the port number of the transmitting port which is carried in the detection frame, the communication port which receives the detection frame is isolated. Due to the formation of the closed loop, all of node S1, node S2, node S3 and node S4 can receive the detection frames transmitted by themselves, assuming that the port number of port F of node S1 is larger than that of port G, after node S1 receives the detection frame transmitted by itself from port G at port F, port F is isolated, similarly, node S2 isolates port D, node S3 isolates port B, and node S4 isolates port A. Thus, the original closed loop can not communicate normally. After 0.5s, nodes S1 and S2 do not receive the detection frames transmitted by themselves, relieve the isolation for ports F and D respectively, the detection frame timeout duration of node S3 is a relatively small value (1.1s), and after waiting for 1.1s, the isolation for corresponding ports will also be relieved, at this time, node S4 can still receive the detection frame transmitted by itself (through S1, S2 and S3 in turn), the isolation for port A will not be relieved, and finally, only port A of node S4 will be in an isolated state, and node S4 becomes a loop forming point, as shown in Fig. 7, at this time, the network can be connected again, which ensures the maximum availability, and prevents the closed loop of the Ethernet from being formed at the same time, thus facilitating the network manager to conveniently locate the node and link which result in the closed loop.

The manner for setting the detection frame timeout duration of the Ethernet node in the embodiment of the present document can prevent a waste of bandwidth caused by data cycle due to a closed loop of a network, thereby ensuring node connectivity while preventing the closed loop from being formed again, and improving the network performance. The embodiment of the present document can further detect a loop forming point, to facilitate the network maintenance.

It should be illustrated that, in the case of no conflict, the embodiments in the present application and the features in the embodiments could be combined randomly with each other.

Of course, the present document can have a plurality of other embodiments. Without departing from the spirit and substance of the present document, those skilled in the art can make various corresponding changes and variations according to the present document, but all these corresponding changes and variations should belong to the protection scope of the appended claims in the present document.

A person having ordinary skill in the art can understand that all or a part of steps in the above method can be implemented by programs instructing related hardware, which can be stored in a computer readable storage medium, such as a read-only memory, a disk or a disc etc. Alternatively, all or a part of steps in the above embodiments can also be implemented by one or more integrated circuits. Accordingly, each module/unit in the above embodiments can be implemented in the form of hardware, or can also be implemented in the form of software functional module. The present document is not limited to any particular form of a combination of hardware and software.

### Industrial Applicability

A method and system for setting the detection frame timeout duration of the Ethernet node in the embodiment of the present document can prevent a waste of bandwidth caused by data cycle due to a closed loop of a network, thereby ensuring node connectivity while preventing the closed loop from being formed again, and improving the network performance. The embodiment of the present document can further detect a loop forming point, to facilitate the network maintenance.

## Claims

1. A method for setting a detection frame timeout duration for detecting a loop forming point, **characterized by** comprising:
when at least one Ethernet node (S1, S2, S3, S4) determines that a communication port keeps a connected state unchanged or changes to a non-connected state from the connected state, setting a detection frame timeout duration of the communication port to a value within a first time range; and after the Ethernet node detects that the communication port changes to the connected state from the non-connected state, setting the detection frame timeout duration of the communication port to a value within a second time range, wherein the value within the second time range is greater than the value within the first time range;
wherein further comprising:
when the Ethernet node receives a detection frame transmitted by itself in the detection frame timeout duration with the value of the respective first or second time range of the communication port and a port number of the communication port satisfies an isolation rule, isolating the communication port;
when the Ethernet node does not receive the detection frame transmitted by itself in the detection frame timeout duration with the value of the respective first or second time range after the communication port is isolated, relieving the isolation for the communication port immediately or after a random delay,
wherein, the isolation operation refers to prohibiting the communication port from forwarding data while permitting the communication port to receive the protocol data,
and the non-connected state of the communication port comprises a non-operating state, a failure state or a state in which data cannot be received and transmitted;
and when various Ethernet nodes of said Ethernet node, which form a closed loop, change from forming the closed loop to forming an open loop,
determining an Ethernet node from the various Ethernet nodes, where its port is isolated and the port is the last port, which enables to convert the open loop to the closed loop, to be a loop forming point of the closed loop.

2. The method according to claim 1, wherein,
the detection frame timeout durations of communication ports corresponding to different Ethernet nodes within the first time range are the same or different; and the detection frame timeout durations of communication ports corresponding to different Ethernet nodes within the second time range are the same or different.

3. A system for for setting a detection frame timeout duration for detecting a loop forming point, comprising at least one Ethernet node (S1, S2, S3, S4), wherein,
the Ethernet node is configured to when determining that a communication port keeps a connected state unchanged or changes to a non-connected state from the connected state, set a detection frame timeout duration of the communication port to a value within a first time range; after detecting that the communication port changes to the connected state from the non-connected state, set the detection frame timeout duration of the communication port to a value within a second time range, wherein the value within the second time range is greater than he value within the first time range; when receiving a detection frame transmitted by itself in the detection frame timeout duration with the value of the respective first or second time range of the communication port and a port number of the communication port satisfies an isolation rule, isolate the communication port; and when not receiving the detection frame transmitted by itself in the detection frame timeout duration with the value of the respective first or second time range after the communication port is isolated, relieve the isolation for the communication port immediately or after a random delay, wherein the system is further configured to determine, when from various Ethernet nodes of said Ethernet node, which form a closed loop, change from forming the closed loop to forming an open loop, an Ethernet node, where its port is isolated and the port is the last port which enables to convert the open loop to the closed loop, to be a loop forming point of the closed loop,
wherein, the isolation operation refers to prohibiting the communication port from forwarding data while permitting the communication port to receive the protocol data,
and the non-connected state of the communication port comprises a non-operating state, a failure state or a state in which data cannot be received and transmitted.

4. The system according to claim 3, wherein,
the detection frame timeout durations of communication ports corresponding to different Ethernet nodes within the first time range are the same or different; and
the detection frame timeout durations of communication ports corresponding to different Ethernet nodes within the second time range are the same or different.

## Patentansprüche

1. Verfahren zum Einstellen einer Erkennungsrahmen-Zeitüberschreitungsdauer zum Erkennen eines Schleifenbildungspunktes, **dadurch gekennzeichnet, dass** es Folgendes umfasst:
wenn wenigstens ein Ethernet-Knoten (S1, S2, S3, S4) feststellt, dass eine Kommunikationsschnittstelle einen Verbindungszustand unverändert belässt oder vom Verbindungszustand in den Nichtverbindungszustand ändert, Einstellen einer Erkennungsrahmen-Zeitüberschreitungsdauer der Kommunikationsschnittstelle auf einen Wert innerhalb eines ersten Zeitbereichs; und nachdem der Ethernet-Knoten festgestellt hat, dass die Kommunikationsschnittstelle sich vom Nichtverbindungszustand in den Verbindungszustand ändert, Einstellen der Erkennungsrahmen-Zeitüberschreitungsdauer der Kommunikationsschnittstelle auf einen Wert innerhalb eines zweiten Zeitbereichs, wobei der Wert innerhalb des zweiten Zeitbereichs größer als der Wert innerhalb des ersten Zeitbereichs ist;
wobei es ferner umfasst:
wenn der Ethernet-Knoten einen Erkennungsrahmen empfängt, der von ihm selbst in der Erkennungsrahmen-Zeitüberschreitungsdauer mit dem Wert des jeweiligen ersten oder zweiten Zeitbereichs der Kommunikationsschnittstelle übertragen wird und eine Schnittstellennummer der Kommunikationsschnittstelle eine Isolierungsregel erfüllt, Isolieren der Kommunikationsschnittstelle;
wenn der Ethernet-Knoten den Erkennungsrahmen, der von ihm selbst in der Erkennungsrahmen-Zeitüberschreitungsdauer mit dem Wert des jeweiligen ersten oder zweiten Zeitbereichs nach dem Isolieren der Kommunikationsschnittstelle übertragen wird, nicht empfängt, Aufheben der Isolierung der Kommunikationsschnittstelle sofort oder nach einer Zufallsverzögerung,
wobei sich der Isolierungsvorgang darauf bezieht, dass die Kommunikationsschnittstelle an der Weiterleitung von Daten gehindert wird, während es der Kommunikationsschnittstelle gestattet ist, Protokolldaten zu empfangen,
und der Nichtverbindungszustand der Kommunikationsschnittstelle einen nichtoperativen Zustand, einen Fehlerzustand oder einen Zustand umfasst, in dem keine Daten empfangen und übertragen werden können;
und wenn verschiedene Ethernet-Knoten des Ethernet-Knotens, die eine geschlossene Schleife bilden, sich vom Bilden der geschlossenen Schleife zum Bilden einer offenen Schleife ändern,
Bestimmen - unter den verschiedenen Ethernet-Knoten - eines Ethernet-Knotens, wo seine Schnittstelle isoliert ist und die Schnittstelle die letzte Schnittstelle ist, die eine Umwandlung der offenen Schleife in die geschlossene Schleife ermöglicht, um ein Schleifenbildungspunkt der geschlossenen Schleife zu sein.

2. Verfahren nach Anspruch 1, wobei
die Erkennungsrahmen-Zeitüberschreitungsdauern von Kommunikationsschnittstellen, die verschiedenen Ethernet-Knoten innerhalb des ersten Zeitbereichs entsprechen, gleich oder verschieden sind; und die Erkennungsrahmen-Zeitüberschreitungsdauern von Kommunikationsschnittstellen, die verschiedenen Ethernet-Knoten innerhalb des zweiten Zeitbereichs entsprechen, gleich oder verschieden sind.

3. System zum Einstellen einer Erkennungsrahmen-Zeitüberschreitungsdauer zum Erkennen eines Schleifenbildungspunktes, umfassend wenigstens einen Ethernet-Knoten (S1, S2, S3, S4),
wobei
der Ethernet-Knoten konfiguriert ist, um bei Feststellen, dass eine Kommunikationsschnittstelle einen Verbindungszustand unverändert belässt oder vom Verbindungszustand in einen Nichtverbindungszustand ändert, Einstellen einer Erkennungsrahmen-Zeitüberschreitungsdauer der Kommunikationsschnittstelle auf einen Wert innerhalb eines ersten Zeitbereichs; nach Feststellen, dass die Kommunikationsschnittstelle sich vom Nichtverbindungszustand in den Verbindungszustand ändert, Einstellen der Erkennungsrahmen-Zeitüberschreitungsdauer der Kommunikationsschnittstelle auf einen Wert innerhalb eines zweiten Zeitbereichs, wobei der Wert innerhalb des zweiten Zeitbereichs größer als der Wert innerhalb des ersten Zeitbereichs ist; bei Empfangen eines Erkennungsrahmens, der von ihm selbst in der Erkennungsrahmen-Zeitüberschreitungsdauer mit dem Wert des jeweiligen ersten oder zweiten Zeitbereichs der Kommunikationsschnittstelle übertragen wird und eine Schnittstellennummer der Kommunikationsschnittstelle eine Isolierungsregel erfüllt, Isolieren der Kommunikationsschnittstelle; und bei Nichtempfangen des Erkennungsrahmens, der von ihm selbst in der Erkennungsrahmen-Zeitüberschreitungsdauer mit dem Wert des jeweiligen ersten oder zweiten Zeitbereichs übertragen wird, nach dem Isolieren der Kommunikationsschnittstelle, Aufheben der Isolierung der Kommunikationsschnittstelle sofort oder nach einer Zufallsverzögerung,
wobei das System ferner konfiguriert ist, um zu bestimmen, wenn unter den verschiedenen Ethernet-Knoten des Ethernet-Knotens, die eine geschlossene Schleife bilden, sich vom Formen der geschlossenen Schleife zum Formen einer offenen Schleife ändern, einen Ethernet-Knoten, dessen Schnittstelle isoliert ist und die Schnittstelle die letzte Schnittstelle ist, die eine Umwandlung der offenen Schleife in die geschlossene Schleife ermöglicht, um ein Schleifenbildungspunkt der geschlossenen Schleife zu sein,
wobei sich der Isolierungsvorgang darauf bezieht, dass die Kommunikationsschnittstelle an der Weiterleitung von Daten gehindert wird, während es der Kommunikationsschnittstelle gestattet ist, Protokolldaten zu empfangen,
und der Nichtverbindungszustand der Kommunikationsschnittstelle einen nichtoperativen Zustand, einen Fehlerzustand oder einen Zustand umfasst, in dem keine Daten empfangen und übertragen werden können.

4. System nach Anspruch 3, wobei
die Erkennungsrahmen-Zeitüberschreitungsdauern von Kommunikationsschnittstellen, die verschiedenen Ethernet-Knoten innerhalb des ersten Zeitbereichs entsprechen, gleich oder verschieden sind; und
die Erkennungsrahmen-Zeitüberschreitungsdauern von Kommunikationsschnittstellen, die verschiedenen Ethernet-Knoten innerhalb des zweiten Zeitbereichs entsprechen, gleich oder verschieden sind.

## Revendications

1. Procédé de réglage d'une durée de temporisation de trame de détection pour détecter un point de formation de boucle, **caractérisé en ce qu'**il comprend :
quand au moins un noeud Ethernet (S1, S2, S3, S4) détermine qu'un port de communication maintient un état connecté inchangé ou change d'un état connecté à un état non connecté, le réglage d'une durée de temporisation de trame de détection du port de communication à une valeur dans une première plage de temps ; et après que le noeud Ethernet détecte que le port de communication change de l'état non connecté à l'état connecté, le réglage de la durée de temporisation de trame de détection du port de communication à une valeur dans une deuxième plage de temps, dans lequel la valeur dans la deuxième plage de temps est supérieure à la valeur dans la première plage de temps ;
dans lequel comprenant en outre :
quand le noeud Ethernet reçoit une trame de détection transmise par lui-même dans la durée de temporisation de trame de détection avec la valeur de la première ou deuxième plage de temps respective du port de communication et un numéro de port du port de communication satisfait une règle d'isolation, l'isolation du port de communication ;
quand le noeud Ethernet ne reçoit pas la trame de détection transmise par lui-même dans la durée de temporisation de trame de détection avec la valeur de la première ou deuxième plage de temps respective après que le port de communication est isolé, l'enlèvement de l'isolation pour le port de communication immédiatement ou après un retard aléatoire,
dans lequel, l'opération d'isolation concerne l'interdiction pour le port de communication de transférer des données tout en permettant au port de communication de recevoir les données de protocole,
et l'état non connecté du port de communication comprend un état de non fonctionnement, un état de défaillance ou un état dans lequel des données ne peuvent pas être reçues et transmises ;
et quand divers noeuds Ethernet dudit noeud Ethernet, qui forment une boucle fermée, changent de la formation de la boucle fermée à la formation d'une boucle ouverte,
la détermination d'un noeud Ethernet à partir des divers noeuds Ethernet, où son port est isolé et le port est le dernier port, qui permet de convertir la boucle ouverte en la boucle fermée, comme étant un point de formation de boucle de la boucle fermée.

2. Procédé selon la revendication 1, dans lequel,
les durées de temporisation de trame de détection de ports de communication correspondant à des noeuds Ethernet différents dans la première plage de temps sont identiques ou différentes ; et les durées de temporisation de trame de détection de ports de communication correspondant à des noeuds Ethernet différents dans la deuxième plage de temps sont identiques ou différentes.

3. Système pour le réglage d'une durée de temporisation de trame de détection pour détecter un point de formation de boucle comprenant au moins un noeud Ethernet (S1, S2, S3, S4),
dans lequel,
le noeud Ethernet est configuré pour quand il détermine qu'un port de communication maintient un état connecté inchangé ou change d'un état connecté à un état non connecté, régler une durée de temporisation de trame de détection du port de communication à une valeur dans une première plage de temps ; après la détection que le port de communication change de l'état non connecté à l'état connecté, régler la durée de temporisation de trame de détection du port de communication à une valeur dans une deuxième plage de temps, dans lequel la valeur dans la deuxième plage de temps est supérieure à la value dans la première plage de temps ; quand il reçoit une trame de détection transmise par lui-même dans la durée de temporisation de trame de détection avec la valeur de la première ou deuxième plage de temps respective du port de communication et un numéro de port du port de communication satisfait une règle d'isolation, isoler le port de communication ; et quand il ne reçoit pas la trame de détection transmise par lui-même dans la durée de temporisation de trame de détection avec la valeur de la première ou deuxième plage de temps respective après que le port de communication est isolé, enlever l'isolation pour le port de communication immédiatement ou après un retard aléatoire,
dans lequel le système est configuré en outre pour déterminer, quand à partir de divers noeuds Ethernet dudit noeud Ethernet, qui forment une boucle fermée, changent de la formation de la boucle fermée à la formation d'une boucle ouverte, un noeud Ethernet, où son port est isolé et le port est le dernier port qui permet de convertir la boucle ouverte en la boucle fermée, comme étant un point de formation de boucle de la boucle fermée,
dans lequel, l'opération d'isolation concerne l'interdiction pour le port de communication de transférer des données tout en permettant au port de communication de recevoir les données de protocole,
et l'état non connecté du port de communication comprend un état de non fonctionnement, un état de défaillance ou un état dans lequel des données ne peuvent pas être reçues et transmises.

4. Système selon la revendication 3, dans lequel,
les durées de temporisation de trame de détection de ports de communication correspondant à des noeuds Ethernet différents dans la première plage de temps sont identiques ou différentes ; et
les durées de temporisation de trame de détection de ports de communication correspondant à des noeuds Ethernet différents dans la deuxième plage de temps sont identiques ou différentes.
